# EUROPEAN PATENT SPECIFICATION

(11) **EP 2 258 803 B1**
(45) Date of publication and mention of the grant of the patent: **01.03.2017**
(21) Application number: 10251018.7
(22) Date of filing: 02.06.2010
(51) Int. Cl.: C09K 8/32, C09K 8/64, C09K 8/82

(54) **Winterizing agents for oil base polymer slurries and method for making an using same**
Ausfriermittel für Polymerschlämme auf Ölbasis und Herstellungsverfahren dafür
Agents de fractionnement pour suspensions de polymères à base d'huile et leur procédé de fabrication et d'utilisation

(30) Priority: 05.06.2009 US 479486
(43) Date of publication of application: 08.12.2010
(60) Divisional application: 13188965.1
(73) Proprietor: Lubrizol Oilfield Solutions, Inc., Wickliffe OH 44092 (US)
(72) Inventor: Monreal, Gabriel, Houston Texas 77027 (US); Perez, Roy T., Jr., San Antonio Texas 78245 (US); Thompson, Joseph, Houston Texas 77082-3610 (US); Zamora, Frank, San Antonio Texas 78232 (US); Kakadjian, Sarkis Ranka, San Antonio Texas 78253 (US)
(74) Representative: Shanks, Andrew

(56) References cited:
- WO-A1-94/16030
- US-A- 5 333 698
- US-A1- 2005 250 666
- US-B1- 6 309 431

## Description

### BACKGROUND OF THE INVENTION

### 1. Field of the Invention

The present invention relates to oil base polymer slurries comprising winterizing agents.

In particular, the present invention relates to oil base polymer slurries comprising winterizing agents, wherein the winterizing agents comprise an ester of a polyol such as an ester of a sugar alcohol.

### 2. Description of the Related Art

Historically the use of different oils as a base fluid for polymer slurries has been limited to oils having pour points low enough to keep the polymer suspended in the slurry at low temperatures. The slurries generally also include organophillic clays, polar activators, and wetting agents. Another approach recommended has been to increase flowability and decrease the pour point of the oil base by adding glycols such as dipropylene glycols methyl ether to the slurries.

Although oil based slurries are known and used in the oil industry, there is a need in the art for oil based slurries that have lower pour point temperatures.

US 6309431 B1 discloses a method of winterizing wax crystal modifiers, comprising the steps of: mixing at least one polymeric wax crystal modifier and a bipolar solvent, wherein said bipolar solvent is selected from the group consisting of alcohols, ethoxylated alcohols, glycol ether esters, and terpenes; heating said polymeric wax crystal modifier and bipolar solvent to a temperature of about 150 °F to 350 °F to solvate the polymeric wax crystal modifier and form a solution; and cooling said solution with mixing to form a suspension of finely divided wax crystal modifiers that remains fluid at temperatures of about -40 °F to 160 °F.

WO 94/16030 discloses an oil-based drilling fluid characterized by non-fluorescence when exposed to ultraviolet light comprising: (a) a continuous phase comprising a synthetic hydrocarbon, said synthetic hydrocarbon being synthesized from one or more olefinic monomers having a chain length of C₂ to C₁₄, said synthetic hydrocarbon having an average molecular weight of from about 120 to about 1000; and (b) an additive selected from the group consisting of surfactants, wetting agents, emulsifiers, and combinations thereof.

US 5333698 discloses a wellbore fluid comprising: (a) at least one additive selected from the group consisting of emulsifiers, wetting agents, viscosifiers, weighting agents, fluid loss control agents, propants for use in hydraulically fracturing subterranean formations, and particulate agents for use in forming a gravel pack; and (b) a white mineral oil having (i) an API gravity at 15.6 °C greater than 35, (ii) a content of compounds containing 14 or more carbon atoms of at least 95 weight percent, and (iii) a pour point of at least about -30°C.

### DEFINITIONS USED IN THE INVENTION

The term winterizing agent, additive or composition, pour point reduction agent, additive or composition or similar terms are interchangeable and have the same meaning. These terms are used to describe a chemical composition that can be added to an oil-based slurry to decrease its pour point temperature, decrease a rate of solids settling, or to improve slurry properties under winter or low temperature conditions.

### SUMMARY OF THE INVENTION

The present invention provides a winterized oil based slurry composition including a base oil, an organophillic clay, a polar activator, a wetting agent and a winterizing composition, the winterizing composition comprising: a polyol monoester, a polyol diester, or a mixtures or combinations thereof, wherein the polyol monoesters or polyol diesters are compounds selected from the group consisting of sorbitan monooleate, sorbitan sesquioleate, sorbitan monostearate, sorbitan sesquistearate, sorbitan monolinoleate, sorbitan sesquilinoleate, sorbitan monomyristoleate, sorbitan sesquimyristoleate, sorbitan monopalmitoleate, sorbitan sesquipalmitoleate, or mixtures and combinations thereof, where the winterizing composition is adapted to reduce a pour point temperature of the oil based slurry composition.

Also disclosed herein are methods for making and using the winterizing compositions.

### BRIEF DESCRIPTION OF THE DRAWINGS

The invention can be better understood with reference to the following detailed description together with the appended illustrative drawings in which like elements are numbered the same:
**Figure 1** depicts a plot of hydration rates of winterized slurries using different base oils.
**Figure 2** depicts a plot of hydration rates of a standard slurry versus a winterized slurry of this invention.
**Figure 3** depicts a plot of rheology of DynaFract HT 40 using standard slurry versus a winterized slurry of this invention at 93.3 °C (200°F).
**Figure 4** depicts a plot of rheology of DynaFract HT 40 using standard slurry versus a winterized slurry of this invention at 121.1 °C (250°F).

### DETAILED DESCRIPTION OF THE INVENTION

The inventors have found that a class of polyol esters are effective additives to reduce a pour point temperature of oil based polymer slurry systems by 6.7 °C (20°F) or more. Embodiments of the additives comprise sugar alcohol derivative surfactants, where the additives are effective in amount between about 500 ppm and 50,000 ppm. Embodiments of the additives comprise sugar sorbitol derivative surfactant, where the additives are effective in amount between about 500 ppm and 50,000 ppm. The inventors have found no mention in the prior art for the used of polyol esters to decrease the pour point of oil base polymer slurries, particularly, sugar alcohol esters, especially sorbitol esters.

Disclosed herein are winterizing additives or agents or pour point depressant additives or agents, where the additives or agents or compositions include a monoester of a polyol, a diester of a polyol, or a mixtures or combinations thereof.

The present invention relates to winterized oil based slurries including a base oil, an organophillic clay, a polar activator, a wetting agent and a winterizing additives or agents or pour point depressant additive, where the additive comprises sorbitan monooleate, sorbitan sesquioleate, sorbitan monostearate, sorbitan sesquistearate, sorbitan monolinoleate, sorbitan sequilinoleate, sorbitan monomyristoleate, sorbitan sequimyristoleate, sorbitan monopalmitoleate, sorbitan sequipalmitoleate, or mixtures and combinations thereof.

Also disclosed herein are methods for using and making the winterized oil based slurries including one or more of the additive compositions of this invention.

Embodiments of the present invention are also related broadly to winterized oil based slurries including one or more of the additive compositions of this invention as well as other additives including, without limitation, scale inhibitors, corrosion inhibitors, oxygen control agents, paraffin control agents, carbon dioxide neutralization agents, sulfur scavenging agent, or other additives commonly used in down hole operations.

Also disclosed herein are methods for using and making the winterized oil based slurries including one or more of the additive compositions of this invention as well as other additives including, without limitation, scale inhibitors, corrosion inhibitors, oxygen control agents, paraffin control agents, carbon dioxide neutralization agents, sulfur scavenging agent, or other additives commonly used in down hole operations.

### Methods for Using the Winterized Composition

### Fracturing

Also disclosed herein is a method for fracturing a formation including the step of pumping a fracturing fluid including a proppant into a producing formation at a pressure sufficient to fracture the formation and to enhance productivity, where the proppant props open the formation after fracturing and where the proppant comprises a particulate solid treated with a winterized composition of this invention.

Also disclosed herein is a method for fracturing a formation including the step of pumping a fracturing fluid including a proppant and a winterized composition of this invention into a producing formation at a pressure sufficient to fracture the formation and to enhance productivity.

Also disclosed herein is a method for fracturing a formation including the step of pumping a fracturing fluid including a winterized composition of this invention into a producing formation at a pressure sufficient to fracture the formation and to enhance productivity.

### Drilling

Also disclosed herein is a method for drilling including the step of while drilling, circulating a drilling fluid, to provide bit lubrication, heat removal and cutting removal, where the drilling fluid includes a winterized composition of this invention. The method can be operated in over-pressure conditions or under-balanced conditions or under managed pressure conditions. The method is especially well tailored to under-balanced or managed pressure conditions.

### Producing

Also disclosed herein is a method for producing including the step of circulating and/or pumping a fluid into a well on production, where the fluid includes a winterized composition of this invention.

### SUITABLE REAGENTS

Suitable base oils include, without limitation, paraffins oils, naphthenic oil, aliphatic solvents and/or oils, aromatic oils, or mixtures and combinations thereof. Exemplary base oils include CALPRINT^{®} 38LP, HYDROCAL^{®} 38, and CONOSOL^{®} C-145 available from Calumet Specialty Products Partners, L.P. of Indianapolis, IN., RENOIL^{®} 30 available from Renkert Oil of Morgantown, PA. and BIOBASE^{®} 360 available from Shrieve Chemical Products, Inc., The Woodlands, TX.

Suitable winterizing additives or agents or pour point depressants are monoesters of polyol, diesters of polyols, or a mixtures of monoesters and diesters of polyol, wherein the esters are selected from the group consisting of include sorbitan monooleate, sorbitan sesquioleate, sorbitan monostearate, sorbitan sesquistearate, sorbitan monolinoleate, sorbitan sequilinoleate, sorbitan monomyristoleate, sorbitan sequimyristoleate, sorbitan monopalmitoleate, sorbitan sequipalmitoleate, or mixtures and combinations thereof.

### Scale Control

Suitable additives for Scale Control and useful in the compositions of this invention include, without limitation: Chelating agents, *e*.*g*., Na, K or NH+4 salts of EDTA; Na, K or NH+4 salts of NTA; Na, K or NH+4 salts of Erythorbic acid; Na, K or NH+4 salts of thioglycolic acid (TGA); Na, K or NH+4 salts of Hydroxy acetic acid; Na, K or NH+4 salts of Citric acid; Na, K or NH+4 salts of Tartaric acid or other similar salts or mixtures or combinations thereof. Suitable additives that work on threshold effects, sequestrants, include, without limitation: Phosphates, *e*.*g*., sodium hexamethylphosphate, linear phosphate salts, salts of polyphosphoric acid, Phosphonates, *e*.*g*., nonionic such as HEDP (hydroxythylidene diphosphoric acid), PBTC (phosphoisobutane, tricarboxylic acid), Amino phosphonates of: MEA (monoethanolamine), NH₃, EDA (ethylene diamine), Bishydroxyethylene diamine, Bisaminoethylether, DETA (diethylenetriamine), HMDA (hexamethylene diamine), Hyper homologues and isomers of HMDA, Polyamines of EDA and DETA, Diglycolamine and homologues, or similar polyamines or mixtures or combinations thereof; Phosphate esters, e.g., polyphosphoric acid esters or phosphorus pentoxide (P₂O₅) esters of: alkanol amines such as MEA, DEA, triethanol amine (TEA), Bishydroxyethylethylene diamine; ethoxylated alcohols, glycerin, glycols such as EG (ethylene glycol), propylene glycol, butylene glycol, hexylene glycol, trimethylol propane, pentaeryithrol, neopentyl glycol or the like; Tris & Tetra hydroxy amines; ethoxylated alkyl phenols (limited use due to toxicity problems), Ethoxylated amines such as monoamines such as MDEA and higher amines from 2 to 24 carbons atoms, diamines 2 to 24 carbons carbon atoms, or the like; Polymers, *e*.*g*., homopolymers of aspartic acid, soluble homopolymers of acrylic acid, copolymers of acrylic acid and methacrylic acid, terpolymers of acylates, AMPS, *etc.,* hydrolyzed polyacrylamides, poly malic anhydride (PMA); or the like; or mixtures or combinations thereof.

### Corrosion Inhibitors

Suitable additives for Corrosion Inhibition and for use in the compositions of this invention include, without limitation: quaternary ammonium salts e.g., chloride, bromides, iodides, dimethylsulfates, diethylsulfates, nitrites, hydroxides, alkoxides, or the like, or mixtures or combinations thereof; salts of nitrogen bases; or mixtures or combinations thereof. Exemplary quaternary ammonium salts include, without limitation, quaternary ammonium salts from an amine and a quaternarization agent, e.g., alkylchlorides, alkylbromide, alkyl iodides, alkyl sulfates such as dimethyl sulfate, diethyl sulfate, *etc.,* dihalogenated alkanes such as dichloroethane, dichloropropane, dichloroethyl ether, epichlorohydrin adducts of alcohols, ethoxylates, or the like; or mixtures or combinations thereof and an amine agent, *e*.*g*., alkylpyridines, especially, highly alkylated alkylpyridines, alkyl quinolines, C6 to C24 synthetic tertiary amines, amines derived from natural products such as coconuts, or the like, dialkylsubstituted methyl amines, amines derived from the reaction of fatty acids or oils and polyamines, amidoimidazolines of DETA and fatty acids, imidazolines of ethylenediamine, imidazolines of diaminocyclohexane, imidazolines of aminoethylethylenediamine, pyrimidine of propane diamine and alkylated propene diamine, oxyalkylated mono and polyamines sufficient to convert all labile hydrogen atoms in the amines to oxygen containing groups, or the like or mixtures or combinations thereof. Exemplary examples of salts of nitrogen bases, include, without limitation, salts of nitrogen bases derived from a salt, *e.g*.: C1 to C8 monocarboxylic acids such as formic acid, acetic acid, propanoic acid, butanoic acid, pentanoic acid, hexanoic acid, heptanoic acid, octanoic acid, 2-ethylhexanoic acid, or the like; C2 to C12 dicarboxylic acids, C2 to C12 unsaturated carboxylic acids and anhydrides, or the like; polyacids such as diglycolic acid, aspartic acid, citric acid, or the like; hydroxy acids such as lactic acid, itaconic acid, or the like; aryl and hydroxy aryl acids; naturally or synthetic amino acids; thioacids such as thioglycolic acid (TGA); free acid forms of phosphoric acid derivatives of glycol, ethoxylates, ethoxylated amine, or the like, and aminosulfonic acids; or mixtures or combinations thereof and an amine, *e*.*g*.: high molecular weight fatty acid amines such as cocoamine, tallow amines, or the like; oxyalkylated fatty acid amines; high molecular weight fatty acid polyamines (di, tri, tetra, or higher); oxyalkylated fatty acid polyamines; amino amides such as reaction products of carboxylic acid with polyamines where the equivalents of carboxylic acid is less than the equivalents of reactive amines and oxyalkylated derivatives thereof; fatty acid pyrimidines; monoimidazolines of EDA, DETA or higher ethylene amines, hexamethylene diamine (HMDA), tetramethylenediamine (TMDA), and higher analogs thereof; bisimidazolines, imidazolines of mono and polyorganic acids; oxazolines derived from monoethanol amine and fatty acids or oils, fatty acid ether amines, mono and bis amides of aminoethylpiperazine; GAA and TGA salts of the reaction products of crude tall oil or distilled tall oil with diethylene triamine; GAA and TGA salts of reaction products of dimer acids with mixtures of poly amines such as TMDA, HMDA and 1,2-diaminocyclohexane; TGA salt of imidazoline derived from DETA with tall oil fatty acids or soy bean oil, canola oil, or the like; or mixtures or combinations thereof.

### Carbon Dioxide Neutralization

Suitable additives for CO₂ neutralization and for use in the compositions of this invention include, without limitation, MEA, DEA, isopropylamine, cyclohexylamine, morpholine, diamines, dimethylaminopropylamine (DMAPA), ethylene diamine, methoxy proplyamine (MOPA), dimethylethanol amine, methyldiethanolamine (MDEA) & oligomers, imidazolines of EDA and homologues and higher adducts, imidazolines of aminoethylethanolamine (AEEA), aminoethylpiperazine, aminoethylethanol amine, di-isopropanol amine, DOW AMP-90™, Angus AMP-95, dialkylamines (of methyl, ethyl, isopropyl), mono alkylamines (methyl, ethyl, isopropyl), trialkyl amines (methyl, ethyl, isopropyl), bishydroxyethylethylene diamine (THEED), or the like or mixtures or combinations thereof.

### Paraffin Control

Suitable additives for Paraffin Removal, Dispersion, and/or paraffin Crystal Distribution include, without limitation: Cellosolves available from DOW Chemicals Company; Cellosolve acetates; Ketones; Acetate and Formate salts and esters; surfactants composed of ethoxylated or propoxylated alcohols, alkyl phenols, and/or amines; methylesters such as coconate, laurate, soyate or other naturally occurring methylesters of fatty acids; sulfonated methylesters such as sulfonated coconate, sulfonated laurate, sulfonated soyate or other sulfonated naturally occurring methylesters of fatty acids; low molecular weight quaternary ammonium chlorides of coconut oils soy oils or C10 to C24 amines or monohalogenated alkyl and aryl chlorides; quanternary ammonium salts composed of disubstituted (*e.g*., dicoco, *etc*.) and lower molecular weight halogenated alkyl and/or aryl chlorides; gemini quaternary salts of dialkyl (methyl, ethyl, propyl, mixed, *etc*.) tertiary amines and dihalogenated ethanes, propanes, *etc.* or dihalogenated ethers such as dichloroethyl ether (DCEE), or the like; gemini quaternary salts of alkyl amines or amidopropyl amines, such as cocoamidopropyldimethyl, bis quaternary ammonium salts of DCEE; or mixtures or combinations thereof. Suitable alcohols used in preparation of the surfactants include, without limitation, linear or branched alcohols, specially mixtures of alcohols reacted with ethylene oxide, propylene oxide or higher alkyleneoxide, where the resulting surfactants have a range of HLBs. Suitable alkylphenols used in preparation of the surfactants include, without limitation, nonylphenol, decylphenol, dodecylphenol or other alkylphenols where the alkyl group has between about 4 and about 30 carbon atoms. Suitable amines used in preparation of the surfactants include, without limitation, ethylene diamine (EDA), diethylenetriamine (DETA), or other polyamines. Exemplary examples include Quadrols, Tetrols, Pentrols available from BASF. Suitable alkanolamines include, without limitation, monoethanolamine (MEA), diethanolamine (DEA), reactions products of MEA and/or DEA with coconut oils and acids.

### Oxygen Control

The introduction of water downhole often is accompanied by an increase in the oxygen content of downhole fluids due to oxygen dissolved in the introduced water. Thus, the materials introduced downhole must work in oxygen environments or must work sufficiently well until the oxygen content has been depleted by natural reactions. For system that cannot tolerate oxygen, then oxygen must be removed or controlled in any material introduced downhole. The problem is exacerbated during the winter when the injected materials include winterizers such as water, alcohols, glycols, Cellosolves, formates, acetates, or the like and because oxygen solubility is higher to a range of about 14-15 ppm in very cold water. Oxygen can also increase corrosion and scaling. In CCT (capillary coiled tubing) applications using dilute solutions, the injected solutions result in injecting an oxidizing environment (O₂) into a reducing environment (CO₂, H₂S, organic acids, *etc*.).

Options for controlling oxygen content includes: (1) de-aeration of the fluid prior to downhole injection, (2) addition of normal sulfides to product sulfur oxides, but such sulfur oxides can accelerate acid attack on metal surfaces, (3) addition of erythorbates, ascorbates, diethylhydroxyamine or other oxygen reactive compounds that are added to the fluid prior to downhole injection; and (4) addition of corrosion inhibitors or metal passivation agents such as potassium (alkali) salts of esters of glycols, polyhydric alcohol ethyloxylates or other similar corrosion inhibitors. Exemplary examples oxygen and corrosion inhibiting agents include mixtures of tetramethylene diamines, hexamethylene diamines, 1,2-diaminecyclohexane, amine heads, or reaction products of such amines with partial molar equivalents of aldehydes. Other oxygen control agents include salicylic and benzoic amides of polyamines, used especially in alkaline conditions, short chain acetylene diols or similar compounds, phosphate esters, borate glycerols, urea and thiourea salts of bisoxalidines or other compound that either absorb oxygen, react with oxygen or otherwise reduce or eliminate oxygen.

### Sulfur Scavenging Agents

The winterized compositions of this invention can also include sulfur scavenging agents provided they are compatible with the compositions. Such sulfur scavenging agents can include those available from Weatherford International, BJ Services, Baker Hughes, Halliburton, other services providers and sulfur scavenger providers. Exemplary examples include those disclosed in United States Pat., Pub. or Appln. Nos. 2007-0032693; 7,140,433; 2005-0137114; 7517447; 2009-0250659; 2005-0250666; 7,268,100; 2008-0039345; 2006-0194700; 2007-0173414; 2007-0129257; 7,392,847; 2008-0257553; 7,350,579; 2009-0203553; 2007-0173413; 2008-0099207; 2008-0318812; 2008-0287325; 2008-0257556; 2008-0314124; 2008-0269082; 2008-0197085; 2008-0257554; 2010-0252262; 2008-0251252; 2009-0151959; 2009-0200033; 2009-0200027; 2010-0000795; 2010-0012901; 2009-0067931; 2008-0283242; 2010-0077938; 2010-0122815; 2010-0197968; 2010-0181071; 2009-0275488; or 2010-0292108.

### EXPERIMENTAL SECTION OF THE INVENTION

We tested formulations of a guar base slurry system such as WGA-15L, available from Clearwater International, LLC, a Weatherford company, in Elmendorf, Texas, using different oils and winterizing agents.

### Method of Preparation of the Slurries

All laboratory slurries were mixed in a plastic beaker using a Caframo BDC3030 standard mixer.

The general slurry preparation included the steps of: (1) adding a base oil to the beaker, (2) adding an organophillic clay with mixing to the base oil, (3) adding a dispersant to the slurry with mixing and mixing the resulting slurry for about 10 minutes, (4) adding a polymer to the slurry with mixing and mixing the resulting slurry for about 10 minutes, and (5) adding a surfactant to the slurry with mixing and mixing the result slurry for about 30 minutes. The mixing times are generally dependent on the mixing rates and mixing times and rates can be adjusted to achieve a desired result. Commonly, the mixing time is between about 5 minutes and about 4 hours. Embodiments employee mixing times between about 10 minutes and about 2 hours. Other embodiments employ mixing times between about 10 minutes and about 1 hour. Other embodiments employ mixing times between about 10 minutes and about 30 minutes.

### Formulations with Different Winterizing Agents

In order to determine the effect of different winterizing agents on slurry properties, different slurry formulations were prepared and tested. The base oil was Hydrocal 38 available from Calumet Specialty Products Partners, L.P. of Indianapolis, IN.

The base formulation used for the winterizing agent testing is set forth in **Table I.**

**TABLE I**

| **Hydrocal 38 Base Formulation** | | |
|---|---|---|
| **Component** | **Commercial Name** | **Amount** |
| Base oil | Hydrocal^{®} 38 | 51.00 wt.% |
| Clay | Claytone^{®} HY | 1.00 wt.% |
| Dispersant | EGMBE | 0.29 wt.% |
| Polymer | WGA-15 | 47.11 wt.% |
| Surfactant | Tomadol^{®} 600 | 0.60 wt.% |

The slurry formulations had a final polymer concentration of 479 kg/m³ (4 lb/gal).

The winterizing agent (Arlacel 83 a sorbitan sequioleate comprising a mixture of mono- and di- esters of oleic acid and hexitol anhydrides of sorbitol) was added to the base oil at a concentration of 5000 ppm (0.5 vol%). **Table II** shows that winterizing agent Arlacel 83 was the most effective winterizing agent for decreasing a pour point temperature of the slurry at equivalent concentrations.

**TABLE II**

| **Settling and Pour Point Testing of the Hydrocal 38 Slurries** | | | | | |
|---|---|---|---|---|---|
| **SG** | **24 hr. Setting (22 °C (72°F))** | **24 hr Setting (41 °C (105°F))** | **Winterizing Agent (ppm)** | **Pour Point (°C)** | **Pour Point (°F)** |
| 1.093 | 0% | 3% | none | -15 | 5 |
| 1.095 | 0% | 3% | **Tween 81** | -21 | -6 |
| | | | (5000) | | |
| 1.090 | --- | --- | DMP | >-16 | >3.2 |
| | | | (5000) | | |
| 1.092 | --- | --- | **G-108** | >-16 | >3.2 |
| | | | (5000) | | |
| 1.093 | --- | --- | **Arlacel 83** | -23 | -9 |
| | | | (5000) | | |

In order to determine the effectiveness of the winterizing agents or pour point temperature reduction additives in slurries formulated with BioBase 360 as the base oil, different slurry formulations were blended and tested using the base formulation set forth in **Table III.**

**TABLE III**

| **Base Formulation** | | |
|---|---|---|
| **Component** | **Commercial Name** | **Amount** |
| Base oil | BioBase 360 | 50.65 wt.% |
| Clay | Bentone 150 | 0.98 wt.% |
| Dispersant | EGMBE | 0.32 wt.% |
| Polymer | WGA-15 | 47.38 wt.% |
| Surfactant | Tomadol 600 | 0.67 wt.% |

The slurry formulations had a final polymer concentration of 479 kg/m³ (4 lb/gal).

**Table IV** shows that none of the winterizing agents were effective at decreasing the pour point temperature of the BioBase^{®} 360 slurries below about -10 °C (14°F), which was attained with Arlacel 83 regardless of concentration between 5000 and 20000 ppm.

**TABLE IV**

| **Pour Point Measurements of Slurries Including Winterizing Agents** | | | | | |
|---|---|---|---|---|---|
| **Slurry SG** | **24 hr. Setting (22 °C (72°F))** | **24 hr Setting (41 °C (105°F))** | **Winterizing Agent (ppm)** | **Pour Point (°C)** | **Pour Point (°F)** |
| 1.01 | 5% | 4% | none | >-5 | >23 |
| 1.01 | 6% | 5% | **Arlacel 83** | >-10 | >14 |
| | | | (5000) | | |
| 1.01 | 6% | 9% | **Arlacel 83** | >-10 | >14 |
| | | | (10000) | | |
| 1.01 | 4% | --- | **Arlacel 83** | >-10 | >14 |
| | | | (20000) | | |
| 1.01 | --- | --- | **DMP** | >-5 | >23 |
| | | | (5000) | | |
| 1.01 | --- | --- | **DMP** | >-5 | >23 |
| | | | (10000) | | |

### Formulations with Different Oils

We then prepared slurry formulations using different base oils using the slurry formulation of **Table V.**

**TABLE V**

| **Formulation Compositions Used in Subsequent Studies** | | |
|---|---|---|
| **Component** | **Commercial Name** | **Amount** |
| Base oil | Variable | Variable |
| Polymer | WGA-15 | 4 lb/gal |
| Clay | Bentone 150/Claytone HY | 1.50 wt.% |
| Dispersant | EGMBE | 0.31 wt.% |
| Surfactant | Tomadol 600 | 0.66 wt.% |

**Table VI** shows the general specification of the oils used in the slurries formulations of **Table V.**

**TABLE VI**

| **General Base Oil Specifications** | | | | |
|---|---|---|---|---|
| **Base Oil** | **Pour Point (°C (°F))** | **Flash Point PMCC (°F)** | **SG @ 16 °C (60°F)** | **Viscosity @ 40°C (cSt)** |
| Calprint^{®} 38LP | -45 (-49^{a}) | 116 (240^{a}) | 0.840 | 4.15 |
| Hydrocal^{®} 38 | -62 (-80) | 91 (196^{a}) | 0.882 | 3.47 |
| Conosol^{®} C-145 | -56 (-69) | 65 (149.5^{a}) | 0.810 | 1.50 |
| Renoil^{®} 30 | -40 (-40) | 76 (169.3^{a}) | 0.790 | 1.58 |
| BioBase^{®} 360 | -40 (-40) | 102 (216) | 0.776 | 2.55 |

| | | | | |
|---|---|---|---|---|
| ^{a} Measured in the lab. | | | | |

The specifications of Calprint 38LP and Hydrocal 38 were used as references.

**Table VII** shows the effect of the base oil formulated into different slurries with or without added winterizing agent Arlacel 83. Winterized base oils contain 10,000 ppm of Arlacel 83 and are denoted with "(W)". Clearly it can be observed that slurries made using Conosol C-145 show lower pour point temperatures which can be mainly due to the lower viscosity of the base oil. This effect is more accentuated when using Claytone HY as the organophillic clay and winterizing the oil with 10,000 ppm of Arlacel 83. It is already well reported that oils with lower viscosity and similar pour point temperatures will make slurries with lower viscosities which is a key parameter in lowering the pour point temperature of the suspension.

**TABLE VII**

| **Effects of Base Oil on Different Slurries** | | | | | | |
|---|---|---|---|---|---|---|
| **Base Oil** | **SG** | **Clay** | **24 hr^{a} (22 °C(72°F)** | **^{24 hra} (41 °C (105°F))** | **^{PPb} (°C)** | **^{PPb} (°F)** |
| Bio-Base 360 | --- | Claytone HY | --- | --- | --- | --- |
| Bio-Base 360(W) | | | --- | --- | --- | --- |
| Bio-Base 360 | 1.01 | Bentone 150 | --- | --- | --- | --- |
| Bio-Base 360(W) | | | <1% | 1% | > -5 | > 23 |
| Conosol C-145 | 1.035 | Claytone HY | 1% | 9% | > -16 | > 3.2 |
| Conosol C-145(W) | | | 1% | 1% | > -35 | > -31 |
| Conosol C-145 | 1.035 | Bentone 150 | <1% | 1% | > -16 | > 3.2 |
| Conosol C-145(W) | | | 1% | 1% | > -22 | > -8 |
| Renoil 30 | 1.02 | Claytone HY | 1% | 6% | > -10 | > 14 |
| Renoil 30(W) | | | <1% | <1% | > -17 | > 1.4 |
| Renoil 30 | 1.02 | Bentone 150 | <1% | 1% | > -10 | > 14 |
| Renoil 30(W) | | | <1% | <1% | > -17 | > 1.4 |
| Hydrocal 38 | --- | Claytone HY | --- | --- | --- | --- |
| Hydrocal 38(W) | | | --- | --- | --- | --- |
| Hydrocal 38 | 1.095 | Bentone 150 | | | > -12 | > 10 |
| Hydrocal 38(W) | | | | | > -20 | > -4 |

| | | | | | | |
|---|---|---|---|---|---|---|
| ^{a} Static or Setting Test ^{b} Pour Point | | | | | | |

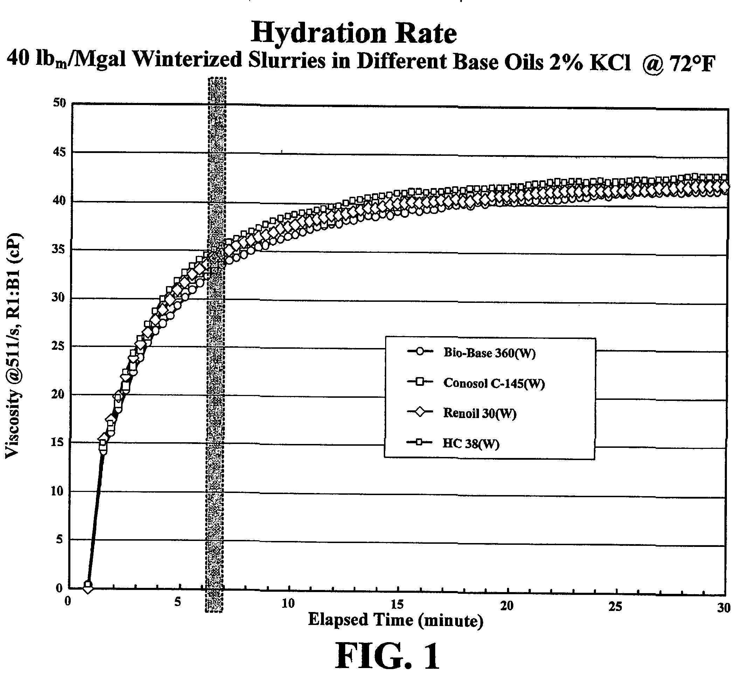

**Figure 1** shows the hydration curves of different slurries in 40 lb/Mgal in 2% KCl brine. Basically a big difference is not observed in the final viscosity after 30 minutes of hydration. The lineal gel systems yielded 80% of the final viscosity within 6 minutes and 48 seconds.

### Hydration and Performance Tests of Slurries of this Invention

An embodiment of a formulation of a slurry of this invention designated **F1A** at 479 kg WGA-15 per m³ (4.0 lb per gallon) was formulated with Conosol C-145 without added winterizer added having a Pour Point > -16 °C (3°F). The **F1A** formulation had the following composition:

| **Component** | **Amount** |
|---|---|
| Conosol C-145 | 51.11 wt.% |
| Bentone 150 | 1.49 wt.% |
| EGMBE | 0.31 wt.% |
| Tomadol 600 | 0.66 wt.% |
| Guar | 46.43 wt.% |

Another embodiment of a formulation of a slurry of this invention designated **F1(W)** at 479 kg WGA-15 per m³ (4.0 lb per gallon) was formulated with Conosol C-145 with added winterizer having a Pour Point ≥ -27 °C (-16°F). The **F1(W)** formulation had the following composition:

| **Component** | **Amount** |
|---|---|
| Conosol C-145 | 51.11 wt.% |
| Winterizing Agent | 10,000 ppm |
| Bentone 150 | 1.49 wt.% |
| EGMBE | 0.31 wt.% |
| Tomadol 600 | 0.66 wt. % |
| Guar | 46.43 wt. % |

Another embodiment of a formulation of a slurry of this invention designated **F2B** at 503 kg WGA-15 per m³ (4.2 lb per gallon) was formulated with Conosol C-145 without added winterizer having a Pour Point > -16 °C (3°F). The **F2B** formulation had the following composition:

| **Component** | **Amount** |
|---|---|
| Conosol C-145 | 48.88 wt.% |
| Bentone 150 | 1.50 wt.% |
| EGMBE | 0.31 wt.% |
| Tomadol 600 | 0.68 wt.% |
| Guar | 48.63 wt.% |

Another embodiment of a formulation of a slurry of this invention designated **F2(W)** at 503 kg WGA-15 per m³ (4.2 lb per gallon) was formulated with Conosol C-145 with added winterizer having a Pour Point temperatures of ≥ -9 °C (16°F). The **F2(W)** formulation had the following composition:

| | |
|---|---|
| Conosol C-145 | 48.88 wt.% |
| Winterizing Agent | 10,000 ppm |
| Bentone 150 | 1.50 wt.% |
| EGMBE | 0.31 wt.% |
| Tomadol 600 | 0.68 wt.% |
| Guar | 48.63 wt.% |

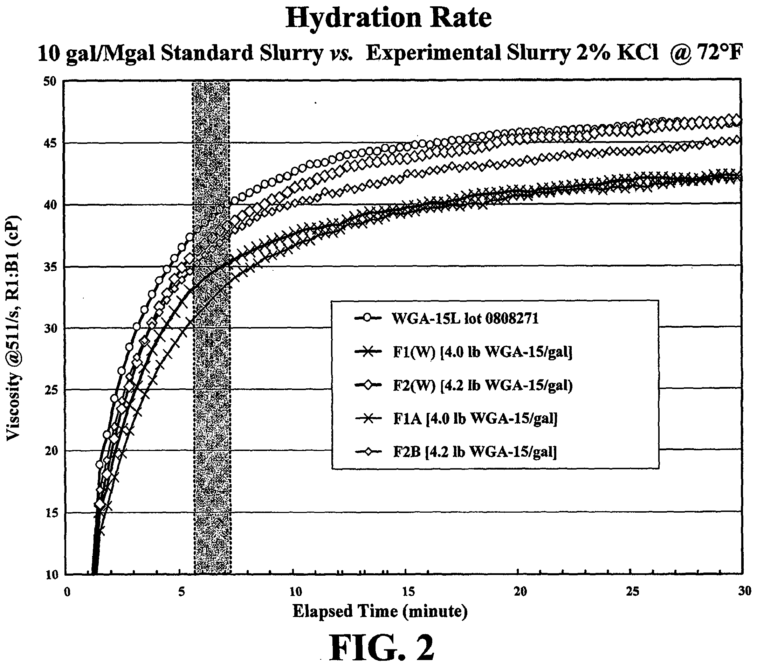

**Figure 2** shows hydration curves of commercially available WGA-15L (Lot 0808271)(available for Clearwater International LLC, Elmendorf, TX) compared to the hydration curves of slurries blended using Conosol C-145(W) with different guar gum concentrations (479 and 503 kg/m³ (4.0 and 4.2 lb/gal) of WGA-15). It can be observed that formulations with 503 kg/m³ (4.2 lb/gal) of WGA-15 yield closer viscosity to the commercial lot.

### Performance Tests of Commercial WGA-15 and Slurries Made with Conosol C-145

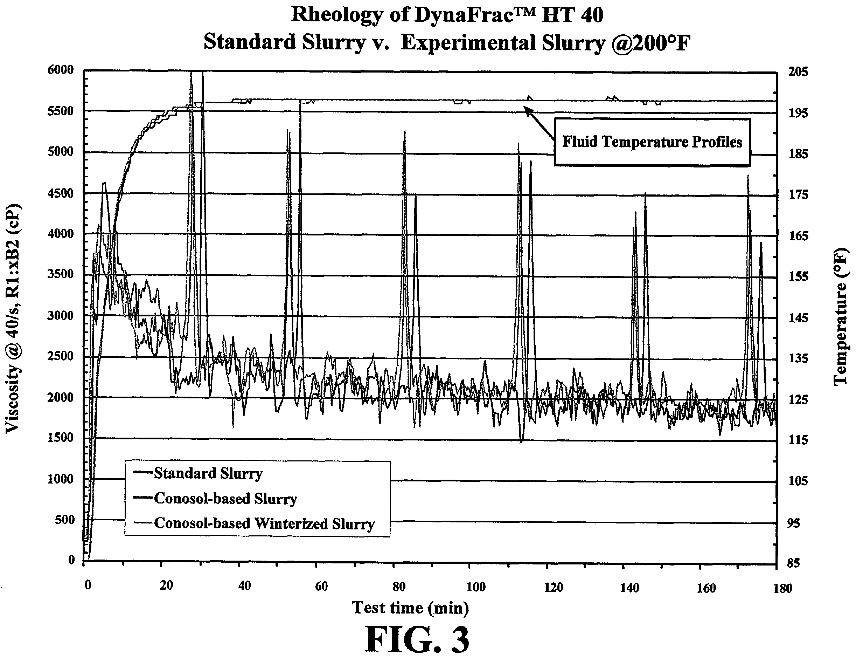

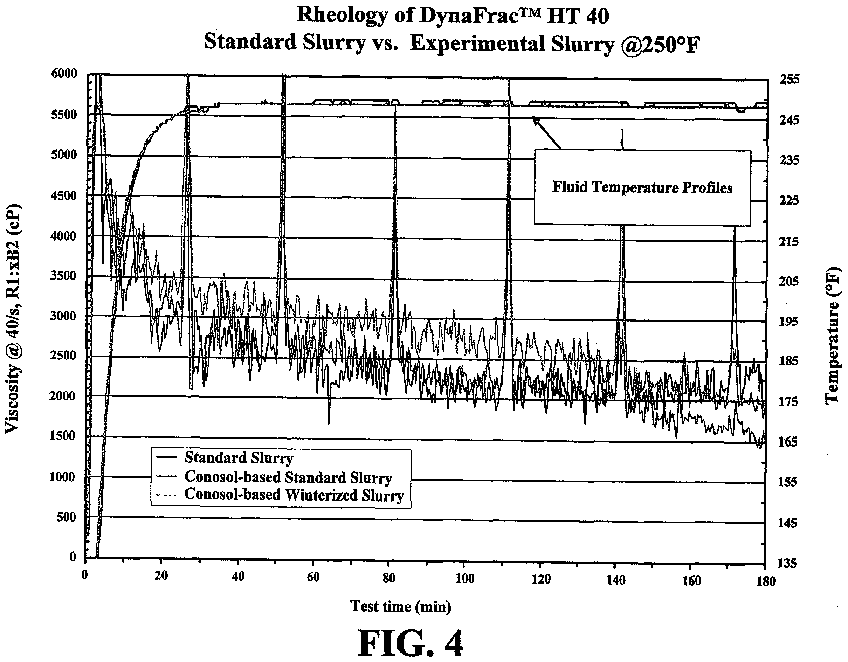

**Figures 3** **and** **4** show the performance tests of both the winterized and not winterized slurries formulated with Conosol C-145. In the case of 30 # gel system, no big differences were observed between the rheological profiles @ 93 °C (200°F). In the case of evaluating 40 # systems @ 121 °C (250°F), the rheological profile is slightly higher when used the winterized version of the slurry.

### EXAMPLE A

This example illustrates the formulation of a slurry of this invention including 2% clay, designated **Example A.**

The oil (Conosol 145) was rolled at medium shear. To the rolled oil was slowly added a winterizing agent (Arlacel 83) and the resulting mixture was mixed for 10 minutes. To this mixtures was added a clay (Benton 150) and the resulting mixture was blended for 15 minutes. To this mixtures was quickly added a pre-blended surfactant (Suspend Aid 130) and the resulting mixture was blended for 15 minutes. To this mixtures was added an guar and the shear rate of the blending was gradually increased. When all guar was added, the slurry was blended at high shear for 30 minutes.

The **Example A** formulation had the following composition:

| **Component** | **Weight %** | **Tradename** |
|---|---|---|
| Base oil (g) | 47.91 | Conosol 145 |
| Winterizing Agent | 0.48 | Arlacel 83 |
| clay | 2.00 | Bentone 150 |
| Surfactant Pre-blend* | 0.98 | Suspend Aid 130 |
| polymer | 48.63 | WGA-15 |
| **Total** | **100** | |

This example illustrates the formulation of a slurry of this invention including 2% clay, designated **Example B.**

The oil (Conosol 145) was rolled at medium shear. To the rolled oil was slowly added a winterizing agent (Arlacel 83) and the resulting mixture was mixed for 10 minutes. To this mixtures was added a clay (Benton 150) and the resulting mixture was blended for 15 minutes. To this mixtures was quickly added a pre-blended surfactant (Suspend Aid 130) and the resulting mixture was blended for 15 minutes. To this mixtures was added an guar and the shear rate of the blending was gradually increased. When all guar was added, the slurry was blended at high shear for 30 minutes.

The **Example B** formulation had the following composition:

| **Component** | **Weight %** | **Tradename** |
|---|---|---|
| Base oil (g) | 47.66 | Conosol 145 |
| Winterizing Agent | 0.48 | Arlacel 83 |
| clay | 2.25 | Bentone 150 |
| Surfactant Pre-blend* | 0.98 | Suspend Aid 130 |
| polymer | 48.63 | WGA-15 |
| **Total** | **100** | |

This example illustrates the formulation of a slurry of this invention including 2% clay, designated **Example C.**

The oil (Conosol 145) was rolled at medium shear. To the rolled oil was slowly added a winterizing agent (Arlacel 83) and the resulting mixture was mixed for 10 minutes. To this mixtures was added a clay (Benton 150) and the resulting mixture was blended for 15 minutes. To this mixtures was quickly added a pre-blended surfactant (Suspend Aid 130) and the resulting mixture was blended for 15 minutes. To this mixtures was added an guar and the shear rate of the blending was gradually increased. When all guar was added, the slurry was blended at high shear for 30 minutes.

The **Example C** formulation had the following composition:

| **Component** | **Weight %** | **Tradename** |
|---|---|---|
| Base oil (g) | 47.41 | Conosol 145 |
| Winterizing Agent | 0.48 | Arlacel 83 |
| clay | 2.5 | Bentone 150 |
| Surfactant Pre-blend* | 0.98 | Suspend Aid 130 |
| polymer | 48.63 | WGA-15 |
| **Total** | **100** | |

**Table VIII** tabulates properties of the slurry formulations. **Table IX** tabulates 22 °C (72°F) Static Settling test results. **Table X** tabulates 22 °C (72°F) stirred settling test results. **Table XI** tabulates 41 °C (105°F) static settling test results.

**TABLE VIII**

| **Properties of Slurry Formations A-C and a Production Slurry** | | | | | | | |
|---|---|---|---|---|---|---|---|
| **LABORATORY FORMULATIONS** | | | | | | | |
| **Clay Type** | **Example** | **Clay (wt.%)** | **SG^{a}** | **Hydration Yield (Pa.s (cP))** | **Pour Point (°C (°F))** | **Winterized** | **Viscosity (Pa.s (cP))** |
| Bentone 150 | **A** | 2 | 1.053 | 0.042(42) | >-20 (-4) | Y | 0.411 (411) |
| | **B** | 2.25 | 1.056 | 0.042(42) | >-12 (11) | Y | 0.392 (392) |
| | **C** | 2.5 | 1.057 | 0.040(40) | >-12 (11) | Y | 0.515 (515) |

| **PRODUCTION FORMULATION** | | | | | | | |
|---|---|---|---|---|---|---|---|
| | **Current** | 2.5 | 1.055 | 0.046(46) | >-4 (25) | N | 0.597 (597) |

**TABLE IX**

| **22 °C(72°F) Static Settling Test Results for Slurry Formations A-C and a Production Slurry** | | | | | | |
|---|---|---|---|---|---|---|
| **LABORATORY FORMULATIONS** | | | | | | |
| **Clay Type** | **Example** | **24 hr** | **48 hr** | **72 hr** | **96 hr** | **120 hr** |
| Bentone 150 | **A** | --- | --- | <1.0 | --- | --- |
| | **B** | --- | --- | <0.5 | --- | --- |
| | **C** | --- | --- | 0 | --- | --- |

| **PRODUCTION FORMULATION** | | | | | | |
|---|---|---|---|---|---|---|
| | **Current** | --- | 0.5 | 1 | --- | --- |

**TABLE X**

| **22 °C (72°F) Stirred Settling Test Results for Slurry Formations A-C and a Production Slurry** | | | | | | |
|---|---|---|---|---|---|---|
| **LABORATORY FORMULATIONS** | | | | | | |
| **Clay Type** | **Example** | **24 hr** | **48 hr** | **72 hr** | **96 hr** | **120 hr** |
| Bentone 150 | **A** | 0.5 | --- | 3 | 4 | --- |
| | **B** | 0.5 | --- | 1.5 | 3 | --- |
| | **C** | 0.5 | --- | 1 | 2 | --- |

| **PRODUCTION FORMULATION** | | | | | | |
|---|---|---|---|---|---|---|
| | **Current** | --- | 0.5 | 1 | --- | --- |

**TABLE XI**

| **41 °C (105°F) Static Settling Test Results for Slurry Formations A-C and a Production Slurry** | | | | | | |
|---|---|---|---|---|---|---|
| **LABORATORY FORMULATIONS** | | | | | | |
| **Clay Type** | **Example** | **24 hr** | **48 hr** | **72 hr** | **96 hr** | **120 hr** |
| Bentone 150 | **A** | 0.5 | --- | <1.0 | 1 | --- |
| | **B** | <0.5 | --- | <0.5 | 1 | --- |
| | **C** | <0.5 | --- | <0.5 | 0.5 | --- |
| **PRODUCTION FORMULATION** | | | | | | |
| | **Current** | --- | 0.5 | 1 | --- | --- |

## Claims

1. A winterized oil based slurry composition including a base oil, an organophillic clay, a polar activator, a wetting agent and a winterizing composition, the winterizing composition comprising:
a polyol monoester, a polyol diester, or a mixtures or combinations thereof,
wherein the polyol monoesters or polyol diesters are compounds selected from the group consisting of sorbitan monooleate, sorbitan sesquioleate, sorbitan monostearate, sorbitan sesquistearate, sorbitan monolinoleate, sorbitan sesquilinoleate, sorbitan monomyristoleate, sorbitan sesquimyristoleate, sorbitan monopalmitoleate, sorbitan sesquipalmitoleate, or mixtures and combinations thereof,
where the winterizing composition reduces the pour point temperature of the oil based slurry composition.

2. A composition according to claim 1, wherein the winterizing composition is a sorbitan sesquioleate comprising a mixture of mono- and di-esters of oleic acid and hexitol anhydrides of sorbitol.

3. A composition according to claim 1 or claim 2, wherein the oil based slurry composition is an oil based polymer slurry composition.

4. A composition according to claim 3, wherein the winterizing composition is present in an amount between 500 ppm and 50,000 ppm of the oil based slurry composition.

5. A composition according to claim 3 or claim 4, wherein the winterizing composition reduces a pour point temperature of the oil based slurry composition by 11 °C (20°F) or more.

6. A composition according to any of claims 3 to 5, wherein the oil based polymer slurry composition comprises a guar polymer.

## Patentansprüche

1. Winterfest gemachte Aufschlämmungszusammensetzung auf Ölbasis, die ein Basisöl, einen organophilen Ton, einen polaren Aktivator, ein Benetzungsmittel und eine winterfest machende Zusammensetzung umfasst, wobei die winterfest machende Zusammensetzung Folgendes umfasst:
einen Polyolmonoester, einen Polyoldiester oder Mischungen oder Kombinationen davon,
wobei die Polyolmonoester oder Polyoldiester Verbindungen sind ausgewählt aus der Gruppe bestehend aus Sorbitanmonooleat, Sorbitansesquioleat, Sorbitanmonostearat, Sorbitansesquistearat, Sorbitanmonolinoleat, Sorbitansesquilinoleat, Sorbitanmonomyristoleat, Sorbitansesquimyristoleat, Sorbitanmonopalmitoleat, Sorbitansesquipalmitoleat oder Mischungen und Kombinationen davon,
wobei die winterfest machende Zusammensetzung die Pourpointtemperatur der Aufschlämmungszusammensetzung auf Ölbasis reduziert.

2. Zusammensetzung nach Anspruch 1, wobei die winterfest machende Zusammensetzung ein Sorbitansesquioleat ist, das eine Mischung von Mono- und Diestern von Ölsäure und Hexitolanhydriden von Sorbit umfasst.

3. Zusammensetzung nach Anspruch 1 oder Anspruch 2, wobei die Aufschlämmungszusammensetzung auf Ölbasis eine Polymeraufschlämmungszusammensetzung auf Ölbasis ist.

4. Zusammensetzung nach Anspruch 3, wobei die winterfest machende Zusammensetzung in einer Menge zwischen 500 ppm und 50.000 ppm, auf die Aufschlämmungszusammensetzung auf Ölbasis bezogen, vorliegt.

5. Zusammensetzung nach Anspruch 3 oder Anspruch 4, wobei die winterfest machende Zusammensetzung eine Pourpointtemperatur der Aufschlämmungszusammensetzung auf Ölbasis um 11 °C (20 °F) oder mehr reduziert.

6. Zusammensetzung nach einem der Ansprüche 3 bis 5, wobei die Polymeraufschlämmungszusammensetzung auf Ölbasis ein Guarpolymer umfasst.

## Revendications

1. Composition de suspension à base d'huile hivérisée incluant une huile de base, une argile organophile, un activateur polaire, un agent mouillant et une composition d'hivérisation, la composition d'hivérisation comprenant:
un monoester de polyol, un diester de polyol, ou des mélanges ou des combinaisons de ceux-ci,
dans laquelle les monoesters de polyol ou les diesters de polyol sont des composés sélectionnés dans le groupe constitué du monooléate de sorbitan, sesquioléate de sorbitan, monostéarate de sorbitan, sesquistéarate de sorbitan, monolinoléate de sorbitan, sesquilinoléate de sorbitan, monomyristoléate de sorbitan, sesquimyristoléate de sorbitan, monopalmitoléate de sorbitan, sesquipalmitoléate de sorbitan, ou des mélanges et combinaisons de ceux-ci,
où la composition d'hivérisation réduit la température du point d'écoulement de la composition de suspension à base d'huile.

2. Composition selon la revendication 1, dans laquelle la composition d'hivérisation est un sesquioléate de sorbitan comprenant un mélange de mono- et di-esters d'acide oléique et d'anhydrides d'hexitol de sorbitol.

3. Composition selon la revendication 1 ou la revendication 2, dans laquelle la composition de suspension à base d'huile est une composition de suspension de polymère à base d'huile.

4. Composition selon la revendication 3, dans laquelle la composition d'hivérisation est présente en une quantité comprise entre 500 ppm et 50 000 ppm de la composition de suspension à base d'huile.

5. Composition selon la revendication 3 ou la revendication 4, dans laquelle la composition d'hivérisation réduit une température de point d'écoulement de la composition de suspension à base d'huile de 11°C (20°F) ou plus.

6. Composition selon l'une quelconque des revendications 3 à 5, dans laquelle la composition de suspension de polymère à base d'huile comprend un polymère type guar.
